# EUROPÄISCHE PATENTSCHRIFT

(11) **EP 1 402 236 B1**
(45) Veröffentlichungstag und Bekanntmachung des Hinweises auf die Patenterteilung: **06.05.2015**
(21) Anmeldenummer: 02743208.7
(22) Anmeldetag: 15.06.2002
(51) Int. Cl.: G01F 1/84

(54) **VERFAHREN ZUR BESTIMMUNG DES MASSEDURCHFLUSSES EINES CORIOLIS MASSEDURCHFLUSSMESSERS**
METHOD FOR DETERMINING THE MASS FLOW RATE OF A CORIOLIS MASS FLOWMETER
PROCEDE POUR DETERMINER LE DEBIT MASSIQUE D'UN DEBITMETRE MASSIQUE DE CORIOLIS

(30) Priorität: 05.07.2001 DE 10132603
(43) Veröffentlichungstag der Anmeldung: 31.03.2004
(73) Patentinhaber: Endress + Hauser Flowtec AG, 4153 Reinach (CH)
(72) Erfinder: MATT, Christian, CH-4147 Aesch (CH)
(74) Vertreter: Andres, Angelika Maria
(86) Internationale Anmeldenummer: PCT/EP2002/006611
(87) Internationale Veröffentlichungsnummer: WO 2003/004979

(56) Entgegenhaltungen:
- US-A- 5 052 231

## Beschreibung

Die Erfindung bezieht sich auf ein Verfahren zur Bestimmung des Massedurchflusses eines Coriolis Massedurchflussmessers.

Coriolis-Massedurchflussmesser werden vielfach in der Prozessautomatisierungstechnik zur Bestimmung des Massedurchflusses eines Fluids in einem Rohrleitungsabschnitt eingesetzt. Hierbei wird ein Messrohr in dem das Fluid fließt in Schwingung versetzt. Durch das strömende Fluid wird die Schwingungsbewegung des Messrohrs beeinflußt. Die Schwingungsbewegung wird normalerweise mit Hilfe von zwei Schwingungssensoren erfaßt. Die Sensorsignale werden in einer Mess- und Betriebsschaltung ausgewertet. Sie weisen die gleiche Frequenz wie die Rohrschwingung des Messrohrs auf, sie sind jedoch gegeneinander phasenverschoben. Die Phasenverschiebung ist ein Maß für den Massedurchfluss des Fluids im Meßrohr. In der Mess- Schaltung werden die Sensorsignale ausgewertet und ihre Phasenverschiebung bestimmt.

Messrohr und Fluid bilden zusammen ein schwingungsfähiges System. Das normalerweise auf seiner Resonanzfrequenz angeregt wird. Die Resonanzfrequenz hängt einerseits vom Material des Messrohrs und andererseits von der Dichte des Fluids ab. Es gibt auch Anwendungen, wo die Anregung nicht auf der Resonanzfrequenz erfolgt, sondern auf einer zur Resonanzfrequenz benachbarten Frequenz.

Neben dem Massedurchfluss können auch weitere Eigenschaften des strömenden Fluids wie z. B. seine Dichte bestimmt werden. Hierzu wird die Schwingungsfrequenz des Messrohrs ausgewertet.

In der US-A 4801897 ist eine Erreger-Teilschaltung beschrieben, die nach Art einer analogen Phase-Lock- Loop-Regelung aufgebaut ist. Die Erregerfrequenz stellt sich dabei auch bei veränderlicher Fluiddichte automatisch auf die Resonanzfrequenz des schwingungsfähigen Systems ein. Bekannten Mess-Schaltungen arbeiten entweder analog wie z. B. in der EP- A698 783 bzw. der US- A 4895030 oder digital wie z. B. in der EP- A 702 212 bzw. der US A54 29 002 beschrieben.

US 5,052,231 offenbart ein Verfahren zur Bestimmung des Massedurchflusses eines Coriolis-Massedurchflussmessers mit folgenden Verfahrensschritten:
Erzeugung einer Schwingungsbewegung eines Messrohrs mit der Frequenz (f);
Erfassen der Schwingungsbewegung des Messrohrs an zwei unterschiedlichen Mess-Stellen mit zwei Schwingungssensoren;
Umwandlung der Sensorsignale der beiden Schwingungssensoren in digitale Sensorsignale (S 1 und S2);
Bestimmung der kartesischen Vektorkomponenten der beiden Sensorsignale (S 1 bzw. S2) in einem Referenzsystem (R) durch ein Multiplizieren von Werten der Sensorsignale mit einem Sinus-Einheitssignal (SE) und ein Cosinus-Einheitssignal (CE), wobei die Einheitssignale (SE und CE) mit der Anregungsfrequenz (f) oszillieren;
Bestimmung von kartesischen Koordinaten von summierten Vektoren der beiden multiplizierten Sensorsignale und ermitteln der Differenz der beiden Vektoren zur Bestimmung des Massedurchflusses.

Aus der EP- A 698 783 ist eine Mess-Schaltung beschrieben, die einen analogen Regelkreis aufweist, der die beiden Sensorsignale auf gleiche Amplitude regelt.

Aus der EP A 866 319 ist eine weiter Mess-Schaltung bekannt. Bei dieser Schaltung werden die beiden Sensorsignale vor der Weiterverarbeitung verstärkt, wobei ein Verstärkungsfaktor eines Verstärkers variabel ist.

In einem Digitalprozessor werden die Summe und die Differenz der beiden Sensorsignale sowie eines der Sensorsignale ausgewertet.

Für die Genauigkeit der Messung ist es wesentlich, daß die beiden Sensorsignale nach ihrer Verstärkung gleiche Amplitude besitzen. Diese Amplitudenregelung ist aufwendig.

Der Erfindung liegt die Aufgabe zugrunde, ein Verfahren zur Bestimmung des Massedurchflusses eines Coriolis Massedurchflußmessers anzugeben, das einfach und kostengünstig ist.

Gelöst wird diese durch ein Verfahren gemäß Anspruch 1.

Die wesentliche Idee der Erfindung besteht darin, daß die Phasenwinkel der beiden Sensorsignale in einem Referenzsystem gemessen werden und durch Differenzbildung die gesuchte Phasenverschiebung ermittelt wird.

Vorteilhafte Weiterentwicklungen sind in den Unteransprüchen angegeben.

Die Erfindung ist nachfolgend anhand eines in der Zeichnung dargestellten Ausführungsbeispiels näher erläutert. Es zeigt:
Fig. 1 Messaufnehmer eines Coriolis-Massedurchflußmessers in schematischer Darstellung,
Fig. 2 Blockschaltbild einer Mess- Schaltung für einen Coriolis-Massedurchflußmessers
Fig. 3 schematische Darstellung der Signalverarbeitung
Fig. 4 zeitlicher Verlauf zweier Einheitssignale SE und CE

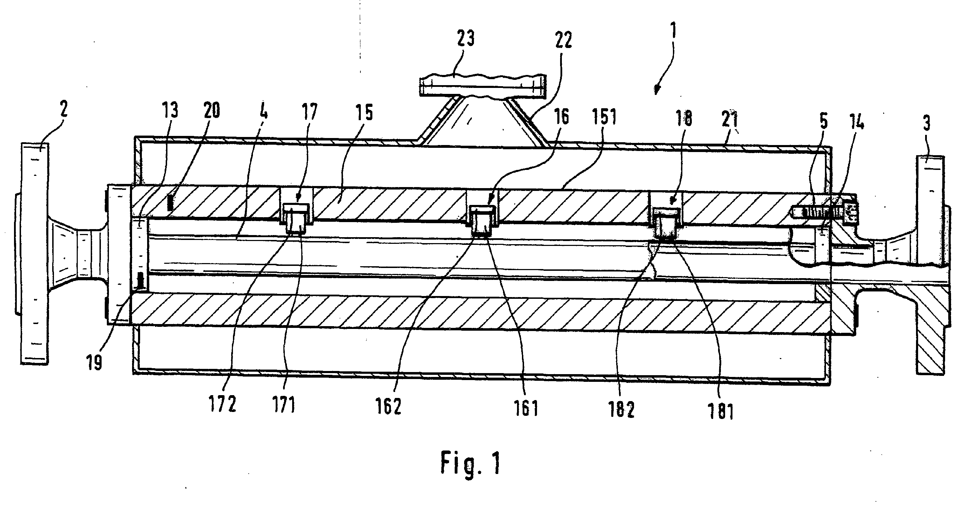

In Fig. 1 ist ein Messaufnehmer 1 für einen Coriolis-Massedurchflußmesser in schematischer Darstellung gezeigt. Der Messaufnehmer 1 ist in einer nicht dargestellten Rohrleitung angeordnet in der ein Fluid F strömt, dessen Massedurchfluss eine der interessierenden Grössen ist. Die Verbindung mit der Rohrleitung erfolgt über die beiden Flansche 2,3.

Der Messaufnehmer 1 weist ein einziges gerades Messrohr 4 auf, das einlaßseitig über eine Endplatte 13 am Flansch 2 und auslaßseitig über eine Endplatte 14 am Flansch 3 fixiert ist.

Das erfindungsgemäße Verfahren ist nicht auf diesen speziellen Messaufnehmer 1 mit einem einzigen geraden Messrohr beschränkt. Es kann auch in Verbindung mit weiteren bekannten Messaufnehmern eingesetzt werden. Zu erwähnen sind z.B. Messaufnehmer mit einem Messrohr mit Auslegermasse, wie z.B. in der EP 97 81 0559 beschrieben, Messaufnehmer mit einem gebogenen Messrohr (EP 96 10 9242) sowie Messaufnehmer mit zwei parallelen geraden oder gebogenen Messrohren (US 4793191 bzw. US 41 27 028).

Die Flansche 2, 3 und die Endplatten sind an oder in einem Trägerrohr 15 befestigt.

Zur Erzeugung der Messrohrschwingung ist in der Mitte zwischen den beiden Endplatten 13, 14 am Messrohr 4 ein Schwingungserreger 16 angeordnet. Bei dem Schwingungserreger 16 kann es sich z.B. um einen elektromagnetischen Antrieb bestehend aus einem Permanentmagnet 161 und einer Spule 162 handeln.

Die Spule 162 ist am Tragrohr 15 und der Permanentmagnet 161 am Messrohr 4 fixiert.

Über den in der Spule 162 fließenden Strom läßt sich die Amplitude und die Frequenz der Biegeschwingung des Messrohrs 4, die in der Zeichenebene verläuft, steuern.

In der Zeichenebene treten auch die Corioliskräfte auf, die bewirken, daß nicht mehr alle Punkte entlang des Messrohrs 4 in Phase schwingen.

Die Schwingungsbewegung des Messrohrs 4 wird mit Hilfe zweier Schwingungssensoren 17 bzw. 18, die etwa symmetrisch zum Schwingungserrereger 16, ebenfalls am Tragrohr 15 angeordnet sind, aufgenommen. Bei den Schwingungssensoren 17 bzw. 18 kann es sich z.B. um elektromagnetische Wandler handeln, die ähnlich der Anordnung Permanentmagnet-Spule des Schwingungserregers 16 aufgebaut sind.

Die beiden Permanentmagnet 171, 181 sind am Messrohr 4 und die beiden Spulen 172, 182 am Tragrohr 15 fixiert. Die Bewegung des Messrohrs 4 bewirkt über die Magnete 171, 181 eine Induktionsspannung in der jeweiligen Spule 172, 182, die als analoges Sensorsignal X17 bzw. X18 abgegriffen wird.

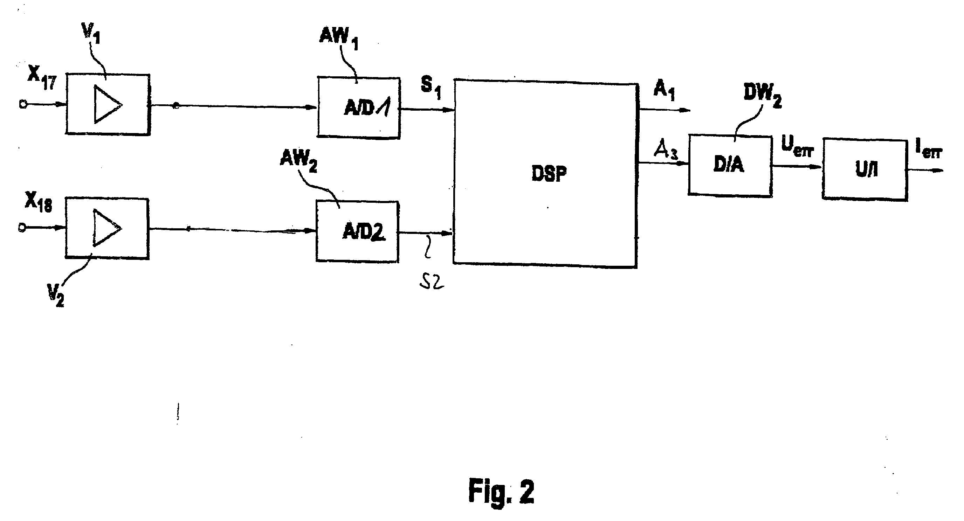

Fig. 2 zeigt eine Mess-Schaltung als Blockschaltbild.

Die Schwingungssensoren 17, 18 sind jeweils mit zwei Verstärkern V1, V2 verbunden, denen jeweils ein analog-digital Wandle A/D1, A/D2 nachgeschaltet ist. Die beiden Wandler A/D1 bzw. A/D2 sind jeweils mit je einem Eingang eines digitalen Signalprozessors DSP verbunden.

Ein Ausgang A3 des digitalen Signalprozessors DSP ist über einen D/A-Wandler D/A mit einem U/I-Wandler U/I verbunden. Der U/I-Wandler U/I liefert das Erregersignal für den Schwingungserreger 16.

Ein Ausgang A1 des digitalen Signalprozessors DSP liefert ein analoges Signal, das dem Massedurchfluß entspricht.

Nachfolgend ist die Signalverarbeitung näher erläutert.

Die beiden Sensorsignale X17, X18 werden in den Verstärkern V1 bzw. V2 verstärkt und in den analog/digital Wandern A/D1 bzw. A/D2 in digitale Sensorsignale S1 bzw. S2 umgewandelt.

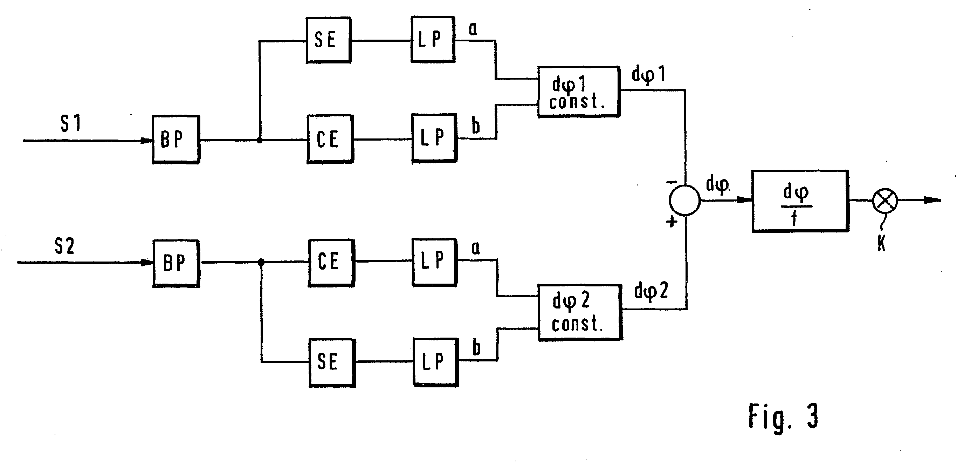

Die digitalen Sensorsignale S1 bzw. S2 werden im digitalen Signalprozessor DSP weiter verarbeitet (Fig. 3).

Zuerst werden die beiden Signale S1, S2 mit einem identischen Bandpassfilter BP gefiltert. Durch die Filterung werden Frequenzen diskriminiert, die bei der weiteren Signalverarbeitung Aliasingeffekte verursachen können. Der Bandpassfilter kann auch als Tiefpassfilter ausgeführt sein.

Anschließend werden die beiden Sensorsignale S1 und S2 jeweils mit einem Sinus- bzw. Cosinus-Einheitssignal SE. CE multipliziert und jeweils mit einem Tiefpass TP gefiltert.

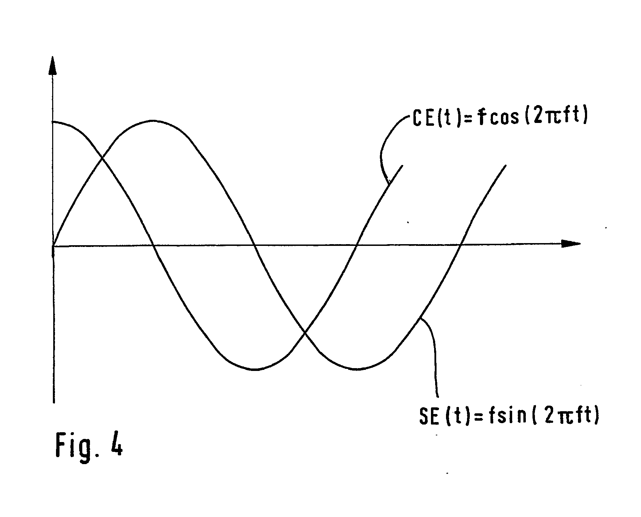

So erhält man jeweils die Vektorkomponenten a,b der beiden Sensorsignale S1, S2 in dem durch die Einheitssignale SE, CE aufgespannten Referenzsystem R. Die beiden Einheitssignale SE und CE oszillieren mit der Anregungsfrequenz f (Fig. 4).

Über die Arcustanges-Funktion und dem jeweiligen Verhältnis a/b erhält man die Phasenwinkel dϕ1 bzw. dϕ2 der beiden Sensorsignale S1, S2 in dem Referenzsystem R.

Die gesuchte Phasenverschiebung dϕ erhält man aus der Differenz dϕ1- dϕ2. Der Massedurchfluß Q ist bekannter Weise proportional zu dϕ/f, d.h. Q= K * dϕ/f mit der Proportionalitätskonstanten K, die über die Eichung des Coriolis-Massedurchflußmessers bestimmt wird.

## Patentansprüche

1. Verfahren zur Bestimmung des Massedurchflusses eines Coriolis-Massedurchflussmessers mit folgenden Verfahrensschritten:
Erzeugung einer Schwingungsbewegung eines Messrohrs mit der Frequenz (f);
Erfassen der Schwingungsbewegung des Messrohrs an zwei unterschiedlichen Mess-Stellen mit zwei Schwingungssensoren;
Umwandlung der Sensorsignale der beiden Schwingungssensoren in digitale Sensorsignale (S1 und S2);
Bestimmung der Phasenverschiebungen (dϕ1 bzw. dϕ2) der beiden Sensorsignale (S1 bzw. S2) in einem Referenzsystem (R), das durch ein Sinus-Einheitssignal (SE) und ein Cosinus-Einheitssignal (CE) gebildet wird,
wobei die Einheitssignale (SE und CE) mit der Anregungsfrequenz (f) oszillieren, und
wobei die beiden Sensorsignale (S 1 und S2) zum Erhalten von Vektorkomponenten (a, b) der beiden Sensorsignale (S1, S2) in dem durch die Einheitssignale (SE, CE) aufgespannten Referenzsystem (R) jeweils mit dem Sinus- bzw. Cosinus-Einheitssignal (SE, CE) multipliziert und jeweils mit einem Tiefpass (TP) gefiltert werden;
Bestimmung der Phasenverschiebung (dϕ) der beiden Sensorsignale über die Differenz (dϕ1 - dϕ2) der Phasenverschiebungen (dϕ1 bzw. dϕ2) der beiden Sensorsignale im Referenzsystem (R);
und Bestimmung des Massedurchflusses (Q ~ dϕ/f),

2. Verfahren nach Anspruch 1, weiters umfassend den Verfahrensschritt: des Ermittelns von Vektorkomponenten (a, b) der beiden Sensorsignale (S1, S2) in dem durch die Einheitssignale (SE, CE) aufgespannten Referenzsystem (R).

## Claims

1. Procedure to determine the mass flow of a Coriolis mass flowmeter comprising the following process steps:
Generation of a vibration movement of a measuring tube at frequency (f);
Recording of the vibration movement of the measuring tube at two different measuring points with two vibration sensors;
Conversion of the sensor signals of the two vibration sensors to digital sensor signals (S1 and S2) ;
Determination of the phase shifts (dϕ 1 or dϕ2) of the two sensor signals (S1 or
S2) in a reference system (R), which is formed by a sinusoidal unit signal (SE) and a cosinusoidal unit signal (CE),
wherein the unit signals (SE and CE) oscillate at the excitation frequency (f), and
wherein, in order to obtain the vector components (a, b) of the two sensor signals (S1, S2) in the reference system (R) formed by the unit signals (SE, CE), the two sensor signals (S1 and S2) are each multiplied by the sinusoidal unit signal (SE) and the cosinusoidal unit signal (CE) and are each filtered with a lowpass filter (TP);
Determination of the phase shift (dϕ) of the two sensor signals via the difference (dϕ 1 - d(p2) of the phase shifts (dϕ 1 or dϕ2) of the two sensor signals in the reference system (R);
and determination of the mass flow (Q ~ dϕ/f).

2. Procedure as claimed in Claim 1, further comprising the following process step:
determination of the vector components (a, b) of the two sensor signals (S1, S2) in the reference system (R) formed by the unit signals (SE, CE).

## Revendications

1. Procédé destiné à la détermination du débit massique d'un débitmètre massique Coriolis avec les étapes de procédé suivantes :
Génération d'un mouvement de vibration d'un tube de mesure à la fréquence (f) ;
Détection du mouvement de vibration du tube de mesure en deux points de mesure différents à l'aide de deux capteurs de vibrations ;
Conversion des signaux des deux capteurs de vibrations en deux signaux de capteur numériques (S1 et S2) ;
Détermination des déphasages (dϕ 1 ou dϕ2) des deux signaux de capteur (S1 ou S2) dans un système de référence (R), lequel est formé par un signal d'unité sinusoïdal (SE) et un signal d'unité cosinusoïdal (CE),
les signaux d'unité (SE et CE) oscillant à la fréquence d'excitation (f), et
les deux signaux de capteur (S1 et S2) étant multipliés respectivement par le signal d'unité sinusoïdal (SE) et le signal d'unité cosinusoïdal (CE) dans le système de référence (R) formé par les signaux d'unité (SE, CE), et filtrés respectivement à l'aide d'un filtre passe-bas (TP) pour l'obtention de composantes vectorielles (a, b) des deux signaux de capteur (S1, S2) ;
Détermination du déphasage (dϕ) des deux signaux de capteur par le biais de la différence (dϕ 1 - dϕ2) des déphasages (dϕ 1 ou dϕ2) des deux signaux de capteur dans le système de référence (R) ;
et détermination du débit massique (Q ∼ dϕ/f).

2. Procédé selon la revendication 1, comprenant en outre l'étape de procédé suivante : détermination de composantes vectorielles (a, b) des deux signaux de capteur (S1, S2) dans le système de référence (R) formé par les signaux d'unité (SE, CE).
